# EUROPEAN PATENT APPLICATION

(11) **EP 4 772 862 A1**
(43) Date of publication of application: **08.07.2026**
(21) Application number: 24859267.7
(22) Date of filing: 25.07.2024
(51) Int. Cl.: G01N 21/90

(54) **INSPECTION DEVICE AND INSPECTION METHOD**

(30) Priority: 31.08.2023 JP 2023141641
(71) Applicant: Panasonic Intellectual Property Management Co., Ltd., Kadoma-shi, Osaka 571-0057 (JP)
(72) Inventor: YAGI Haruhisa, Osaka 571-0057 (JP); HASEGAWA Takasumi, Osaka 571-0057 (JP); YOSHIKAWA Akio, Osaka 571-0057 (JP); OKUMURA Katsuki, Osaka 571-0057 (JP)
(74) Representative: Novagraaf International SA
(86) International application number: PCT/JP2024/026571
(87) International publication number: WO 2025/047225

(57) **Abstract**

An inspection device 1 inspects the fixation state of a first member 4 and a second member 6 of a to-be-inspected object 2 that includes the first member 4 and the second member 6, which are fixed to each other. The first member 4 and the second member 6 of the to-be-inspected object 2 are fixed to each other by fitting a leading end portion of the first member 4 into a groove provided in the outer peripheral surface of the second member 6, which has a cylindrical shape. The inspection device 1 comprises: an axicon mirror 16 that has an opening 26 into which the to-be-inspected object 2 is inserted and a mirror surface 28 extending outside the opening 26 and surrounding the outer peripheral surface of the to-be-inspected object 2 that has been inserted into the opening 26; and a camera 18 that captures mirror images of the groove and the leading end portion that are shown on the mirror surface 28.

## Description

### TECHNICAL FIELD

The present disclosure relates to inspection devices and inspection methods.

### BACKGROUND ART

Patent Literature 1 discloses a technology for performing an appearance inspection of the fixation state of a can body and a can lid of a metal can. The inspection method according to Patent Literature 1 involves capturing an image of the fixation part of the can body and the can lid using a camera arranged on the side of the metal can and then determining the quality of the appearance based on the captured image.

### RELATED-ART LITERATURE

### PATENT LITERATURE

Patent Literature 1: JP H04-121648A

### SUMMARY OF INVENTION

### TECHNICAL PROBLEM

In conventional inspection methods, in order to inspect the fixation state over the entire circumference of the metal can, it is necessary to rotate at least one of the camera and the metal can. In this case, there is a problem that positional misalignment and angular misalignment between the camera and the metal can are easily caused by the rotation, which can reduce the accuracy of the inspection.

The present disclosure has been made in view of such a situation, and a purpose thereof is to provide a technology for improving inspection accuracy at the time of performing an appearance inspection of the fixation state of two members.

### SOLUTION TO PROBLEM

One embodiment of the present disclosure relates to an inspection device that inspects a fixation state of a first member and a second member of an inspection object that includes the first member and the second member, which are fixed to each other. In the inspection object, the first member and the second member are fixed to each other by fitting of a leading end portion of the first member into a groove provided on the outer peripheral surface of the second member, which has a cylindrical shape. The inspection device includes: an axicon mirror that has an opening into which the inspection object is inserted and a mirror surface extending outside the opening and surrounding the outer peripheral surface of the inspection object inserted into the opening; and a camera that captures a mirror image of the groove and a mirror image of the leading end portion that are shown on the mirror surface.

Another embodiment of the present disclosure relates to an inspection method for inspecting a fixation state of a first member and a second member of an inspection object that includes the first member and the second member, which are fixed to each other. In the inspection object, the first member and the second member are fixed to each other by fitting of a leading end portion of the first member into a groove provided on the outer peripheral surface of the second member, which has a cylindrical shape. The inspection method includes: inserting the inspection object into an opening of an axicon mirror; and capturing, using a camera, a mirror image of the groove and a mirror image of the leading end portion that are shown on a mirror surface of the axicon mirror.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, inspection accuracy at the time of performing an appearance inspection of the fixation state of two members can be improved.

### BRIEF DESCRIPTION OF DRAWINGS

[Figs. 1] Figs. 1A, 1B, 1C, 1D, 1E, 1F, 1G, and 1H are schematic diagrams for explaining an inspection object.
[Fig. 2] Fig. 2 is a schematic diagram of an inspection device according to an embodiment.
[Fig. 3] Fig. 3 is a diagram explaining an image captured by a camera.
[Fig. 4] Fig. 4 is a schematic diagram of an inspection device according to the first exemplary variation.
[Fig. 5] Fig. 5 is a diagram explaining an image captured by a camera.
[Fig. 6] Fig. 6 is a schematic diagram of an axicon mirror provided in an inspection device according to the second exemplary variation.

### DESCRIPTION OF EMBODIMENTS

Hereinafter, the present disclosure will be described based on a preferred embodiment with reference to the figures. The embodiments do not limit the present disclosure and are shown for illustrative purposes, and not all the features described in the embodiments and combinations thereof are necessarily essential to the present disclosure. The same or equivalent constituting elements, members, and processes illustrated in each drawing shall be denoted by the same reference numerals, and duplicative explanations will be omitted appropriately. The scales and shapes shown in the figures are defined for convenience's sake to make the explanation easy and shall not be interpreted limitatively unless otherwise specified. Terms like "first," "second," etc., used in the specification and claims do not indicate an order or importance by any means unless specified otherwise and are used to distinguish a certain feature from the others. Some of the components in each figure may be omitted if they are not important for explanation.

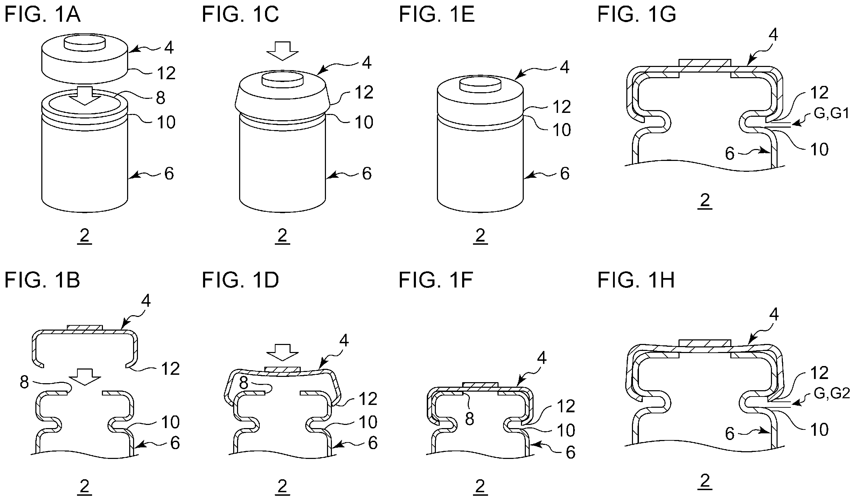

First, before the explanation of an inspection device 1 according to the present embodiment, an explanation will be given of an inspection object 2, which is the subject of the inspection. Figs. 1A, 1B, 1C, 1D, 1E, 1F, 1G, and 1H are schematic diagrams for explaining the inspection object 2. Fig. 1A, Fig. 1C, and Fig. 1E are perspective views of the inspection object 2, and Fig. 1B, Fig. 1D, and Fig. 1F to Fig. 1H are cross-sectional views of a part of the inspection object 2.

In the present embodiment, an explanation will be given using a cylindrical battery as an example for the inspection object 2. The inspection object 2 includes a first member 4 and a second member 6, which are fixed to each other. If the inspection object 2 is a cylindrical battery, the first member 4 is a can lid and the second member 6 is a can body. Thus, the first member 4 has a flat-bottomed cylindrical shape, and the second member 6 has a bottomed cylindrical shape that is longer than the first member 4. The second member 6 has an opening 8 on one end side thereof in the longitudinal direction. Further, a groove 10 is provided on the outer periphery of the second member 6. The groove 10 extends in the direction around the axis of the second member 6 near the opening 8. As an example, the groove 10 extends all around the entire circumference of the second member 6. In a state in which the first member 4 and the second member 6 are lined up in a vertical direction, the groove 10 has a lower surface facing the first member 4 side and an upper surface facing the lower surface at a predetermined distance from the lower surface. The upper surface is located closer to the first member 4 than the lower surface.

A winding electrode group (not shown) and an electrolytic solution (not shown) are put inside the second member 6 through the opening 8. The electrode group consists of a positive electrode plate, a separator, a negative plate, and a separator, which are strip-shaped, stacked and wound in this order. Then, as shown in Fig. 1 A and Fig. 1 B, the first member 4 is placed over the opening 8 while a leading end portion 12 of the first member 4, in other words, the open end is facing the second member 6 side. As an example, the leading end portion 12 is ring-shaped, extending all around the entire circumference of the first member 4. Then, as shown in Fig. 1C and Fig. 1D, the first member 4 is pressed against the second member 6, and the second member 6 enters the first member 4. The leading end portion 12 of the first member 4 is tapered. Therefore, the diameter of the leading end portion 12 is less than the diameter of a portion of the second member 6 located on the opening 8 side from the groove 10. For this reason, when the second member 6 enters the first member 4, the leading end portion 12 is pressed against the outer peripheral surface of the second member 6 such that the leading end portion 12 deforms elastically and opens outward.

When the first member 4 is further pressed against the second member 6, the leading end portion 12 reaches the groove 10, as shown in Figs. 1E and 1F. When the leading end portion 12 reaches the groove 10, the force of the outer peripheral surface of the second member 6 pressing the leading end portion 12 disappears. Therefore, the first member 4 returns to its original shape by its own elasticity. As a result, the leading end portion 12 fits into the groove 10, and the first member 4 and the second member 6 become fixed to each other. As a result of this, the opening 8 is covered by the first member 4, sealing the electrode body and the electrolyte solution.

The leading end portion 12 comes into contact with the upper surface of the groove 10. A gap G is thus formed between the lower end of the leading end portion 12 and the lower surface of the groove 10. As shown in Fig. 1G, in a state where the first member 4 and the second member 6 are properly fixed to each other, a gap G1 of a predetermined size is formed. On the other hand, as shown in Fig. 1H, in a state where the first member 4 and the second member 6 are not properly fixed to each other, a gap G2 of a size different from that of the gap G1 is formed. Therefore, the state of fixation of the first member 4 and the second member 6 can be learned if the size of the gap G can be confirmed on the entire peripheral surface of the outer peripheral surface of the inspection object 2.

The leading end portion 12 does not need to be tapered before the first member 4 becomes fixed to the second member 6. In this case, after the first member 4 is fitted into the second member 6 and the leading end portion 12 reaches the groove 10, a bending process is performed on the leading end portion 12 such that the leading end portion 12 fits into the groove 10. In other words, the leading end portion 12 is fixed to the groove 10 by caulking.

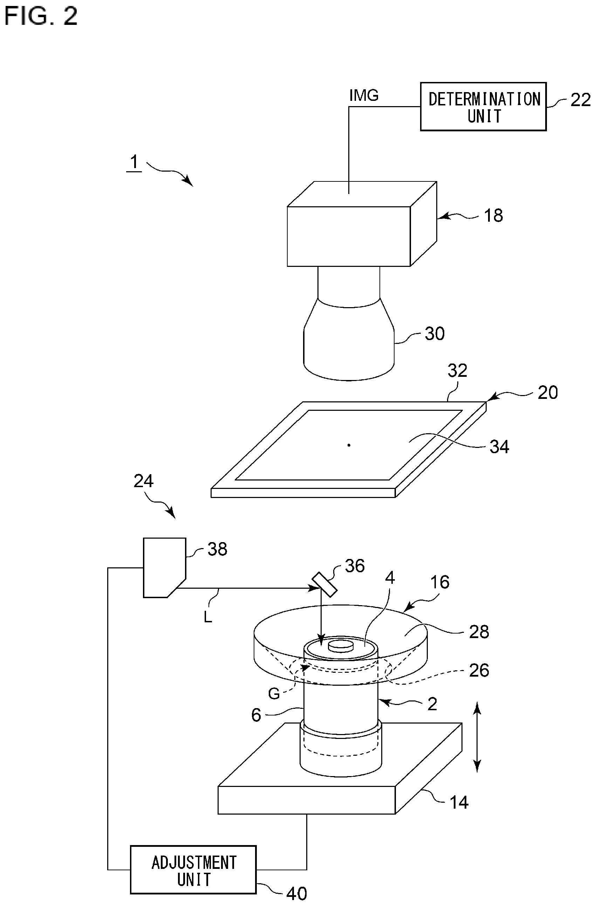

Fig. 2 is a schematic diagram of an inspection device 1 according to the embodiment. In Fig. 2, some parts of the inspection device 1 are depicted as functional blocks. At least some of these functional block may be implemented by elements such as a CPU or memory of a computer or by a circuit as a hardware configuration, and by a computer program or the like as a software configuration. Therefore, it will be obvious to those skilled in the art that these functional blocks may be implemented in a variety of manners by a combination of hardware and software.

The inspection device 1 inspects the fixation state of the first member 4 and the second member 6 of the inspection object 2. The fixation state can also be referred to as a caulking state. The inspection device 1 includes a base 14, an axicon mirror 16, a camera 18, a lighting unit 20, a determination unit 22, and a measurement unit 24. In the present embodiment, as an example, the base 14, the axicon mirror 16, the lighting unit 20, and the camera 18 are aligned in the vertical direction. However, the direction of arrangement of these components is not limited to the vertical direction.

The inspection object 2 is placed on the base 14. The axicon mirror 16 is arranged above the base 14. The axicon mirror 16 is fixed to a bracket (not shown). The axicon mirror 16 is ring-shaped and has an opening 26 arranged in the center and a mirror surface 28 surrounding the opening 26. The inspection object 2, which is placed on the base 14, is inserted into the opening 26. The diameter of the opening 26 is generally larger than the diameter of the inspection object 2 such that the inspection object 2 can be smoothly inserted into the opening 26. The mirror surface 28 extends outward from the periphery of the opening 26. The mirror surface 28 inclines away from the base 14 as a distance from the opening 26 increases, and the mirror surface 28 surrounds the outer peripheral surface of the inspection object 2 inserted into the opening 26. The inclination angle of the mirror surface 28 is, for example, 45 degrees. The positional relationship between the inspection object 2 and the axicon mirror 16 is determined such that the gap G and the mirror surface 28 overlap in the horizontal direction.

A camera 18 is arranged above the axicon mirror 16. The camera 18 is sensitive to at least the wavelength range of light emitted by the lighting unit 20, for example, visible light. The camera 18 is fixed to the bracket and oriented such that the imaging direction faces the axicon mirror 16 side. As an example, the camera 18 has a telecentric lens 30.

The lighting unit 20 is arranged between the axicon mirror 16 and the camera 18. The lighting unit 20 is configured as a known flat dome lighting unit, for example, and has a light source unit 32 and a window 34. The light source unit 32 is frame-shaped and has a light source such as an LED. The window 34 is made of translucent resin and is fitted into the frame of the light source unit 32. The light source unit 32 emits light toward the window 34. The window 34 can emit light emitted from the light source unit 32 toward at least one of the inspection object 2 and the axicon mirror 16. This allows light to be emitted to the inspection object 2 directly or through the mirror surface 28. The light reflected by the inspection object 2 is reflected upward by the mirror surface 28, passes through the window 34, and enters the camera 18. Therefore, the camera 18 can capture a mirror image reflected on the mirror surface 28 through the lighting unit 20.

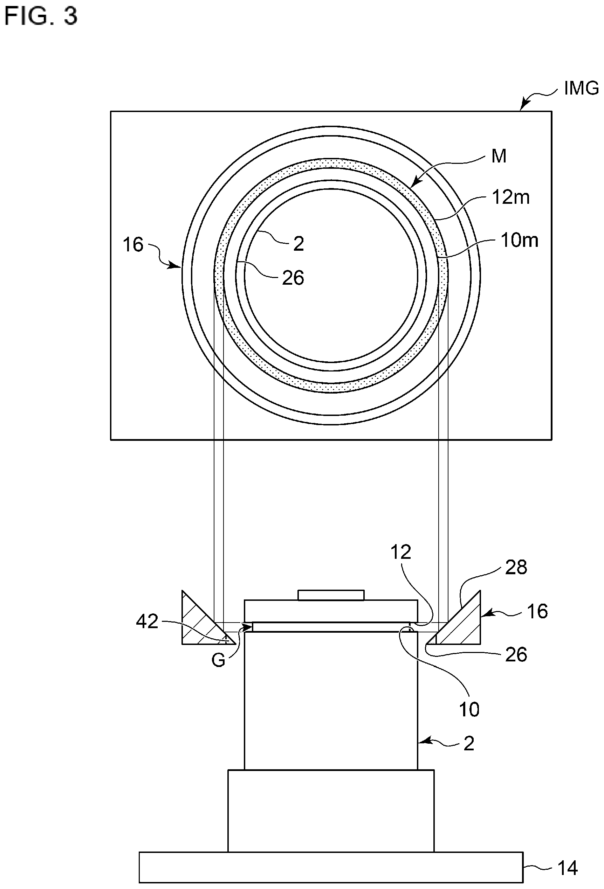

Fig. 3 is a diagram explaining an image IMG captured by the camera 18. The image IMG captured by the camera 18 includes a mirror image 10m of the lower surface of the groove 10 and a mirror image 12m of the lower end of the leading end portion 12 that are reflected on the mirror surface 28. The mirror image 10m of the groove 10 and the mirror image 12m of the leading end portion 12 form a ring-shaped mirror image M corresponding to the gap G. The inner peripheral edge of the mirror image M represents the mirror image 10m of the lower surface of the groove 10 and the outer peripheral edge of the mirror image M represents the mirror image 12m of the lower end of the leading end portion 12.

As shown in Fig. 2, the camera 18 sends the image IMG to the determination unit 22. The determination unit 22 determines the fixation state of the first member 4 and the second member 6 based on the shape of the mirror image 10m of the groove 10 and the mirror image 12m of the leading end portion 12 in the image IMG, in other words, based on the shape of the mirror image M. For example, as reference information, the determination unit 22 stores in advance information related to the mirror image M formed while the first member 4 and the second member 6 are properly fixed to each other. Then, the determination unit 22 calculates the degree of dissociation of the mirror image M in the acquired image IMG with respect to the reference information. The determination unit 22 determines the fixation state of the first member 4 and the second member 6 to be normal when the calculated degree of dissociation is less than or equal to a predetermined threshold value, and the determination unit 22 determines the fixation state to be abnormal when the degree of dissociation exceeds the threshold value. The threshold value can be set as appropriate by the designer through experiments, simulations, etc.

For example, the determination unit 22 keeps, as the reference information, the value of the thickness of the mirror image M obtained during a normal fixation state, i.e., the value of the interval between the mirror image 10m of the groove 10 and the mirror image 12m of the leading end portion 12. The determination unit 22 compares the thickness of the mirror image M in the image IMG with the reference information. If the mirror image M includes a part where the difference in thickness exceeds the threshold value, the fixation state is determined to be abnormal. The value of the thickness of the mirror image M may be a value on the basis of the pixel size of the image IMG or may be a value on the basis of the actual dimension obtained by integrating the optical resolution [µm] per pixel obtained on the basis of the production value of the inner diameter of the axicon mirror 16. The reference information may be information related to the shape of the mirror image M other than the thickness.

As an example, when the determination unit 22 determines that the fixation state is abnormal, the determination unit 22 reports the determination result to the user of the inspection device 1 by a known reporting method. The reporting method is not particularly limited, and a known method such as generating an alarm sound or turning on an alarm light can be employed. The determination unit 22 may display the determination result on a monitor (not shown). The image IMG itself may also be presented to the user. In this case, the user can check the presented image IMG so as to determine whether the fixation state is normal or abnormal. If the image IMG itself is used for the user, the determination unit 22 may be omitted.

The measurement unit 24 measures the position of the inspection object 2 relative to the axicon mirror 16 in the direction of insertion of the inspection object 2 into the opening 26. As an example, the measurement unit 24 has a turning mirror 36 and a laser displacement sensor 38. The turning mirror 36 is arranged so as to overlap the inspection object 2 when viewed from the arrangement direction of the inspection object 2 and the camera 18. The laser displacement sensor 38 is arranged to be misaligned in a direction intersecting the arrangement direction. The laser displacement sensor 38 is a triangulation or optical confocal system sensor, which can measure the position of the inspection object 2 by emitting a laser beam L onto the inspection object 2 and receiving the laser beam L reflected by the inspection object 2.

By interposing the turning mirror 36 between the laser displacement sensor 38 and the inspection object 2, the laser displacement sensor 38 can be removed from the angle of view of the camera 18. Thereby, the inhibition of the inspection of the fixation state by the laser displacement sensor 38 can be suppressed. Further, by arranging the turning mirror 36 directly above the from inspection object 2, the overlap of the turning mirror 36 with the mirror surface 28 when viewed from the camera 18 can be avoided. Therefore, the inhibition of the inspection of the fixation state by the turning mirror 36 can be suppressed.

When the position of the inspection object 2 relative to the axicon mirror 16 changes, the position of the gap G relative to the mirror surface 28 changes. When the position of the gap G relative to the mirror surface 28 changes, the size of the mirror image M changes. When determining the fixation state based on the shape of the mirror image M, it is easier to improve the inspection accuracy if the size of the mirror image M is constant.

Therefore, the inspection device 1 according to the present embodiment measures the position of the inspection object 2 relative to the axicon mirror 16 by the measurement unit 24. The measurement unit 24 sends the measurement result to an adjustment unit 40. As an example, the adjustment unit 40 has a drive mechanism combined with a known motor or the like to advance and retract the base 14 relative to the axicon mirror 16. The adjustment unit 40 displaces the base 14 based on the measurement result from the measurement unit 24. For example, the adjustment unit 40 maintains in advance information related to the reference position of the base 14 and displaces the base 14 to the reference position. This allows the size of the mirror image M in the image IMG to be constant, thereby increasing the inspection accuracy of the fixation state.

The measurement result itself may be presented to the user by, e.g., displaying the measurement result on a monitor (not shown) by the measurement unit 24. In this case, the user can manually adjust the position of the inspection object 2 while checking the presented measurement result. In this case, the adjustment unit 40 may be omitted.

As shown in Fig. 3, the axicon mirror 16 according to the present embodiment has a low-reflective surface 42 on the peripheral edge of the opening 26, in other words, on the inner peripheral edge of the axicon mirror 16. The low-reflective surface 42 has a lower light reflectance than the outer peripheral surface of the inspection object 2 and the mirror surface 28. The low-reflective surface 42 can be formed by applying a known low-reflection treatment to the inner peripheral edge of the axicon mirror 16. Examples of the low-reflection treatment include the application of an ultra-low reflection material such as carbon black, AR coating, i.e., coating with an anti-reflection film, and low-reflection processing such as embossing.

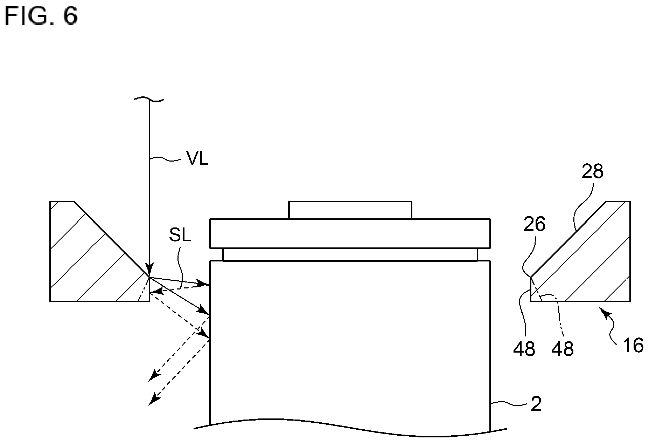

At the inner peripheral edge of the axicon mirror 16, light emitted from the lighting unit 20 may diffract or scatter (see Fig. 6). This diffracted or scattered light is reflected on the outer peripheral surface of the inspection object 2 and becomes stray light. If this stray light is reflected by the mirror surface 28 and enters the camera 18, the contour of the mirror image M may become unclear. In contrast, by providing the low-reflective surface 42, the generation of diffracted light and scattered light and the reflection of stray light toward the camera 18 can be suppressed. As a result, the inspection accuracy of the fixation state can be improved.

As explained above, the inspection device 1 according to the present embodiment surrounds the entire circumference of the outer surface of the inspection object 2 with the axicon mirror 16, and the camera 18 captures a mirror image 10m of the groove 10 and a mirror image 12m of the leading end portion 12 that are reflected on the mirror surface 28. This allows for inspection of the fixation state of the first member 4 and the second member 6 on the entire circumference of the inspection object 2 without relative rotation of the camera 18 and the inspection object 2. Therefore, the inspection accuracy at the time of performing an appearance inspection of the fixation state can be improved.

The determination regarding the fixation state performed by the determination unit 22 can further improve the inspection accuracy. In addition, the time required to inspect the fixation state can be reduced. The measurement of the height position of the inspection object 2 relative to the axicon mirror 16 performed by the measurement unit 24 can further improve the inspection accuracy. Having the low-reflective surface 42, the axicon mirror 16 can further improve the inspection accuracy.

Described above is a detailed explanation on the embodiments of the present disclosure. The above-described embodiments merely show specific examples for carrying out the present disclosure. The details of the embodiment do not limit the technical scope of the present disclosure, and many design modifications such as change, addition, deletion, etc., of the constituent elements may be made without departing from the spirit of the present invention defined in the claims. New embodiments resulting from added design change will provide the advantages of the embodiments and variations that are combined. In the above-described embodiments, the details for which such design change is possible are emphasized with the notations "according to the embodiment," "in the embodiment," etc. However, design change is also allowed for those without such notations. Optional combinations of the constituting elements included in each embodiment are also valid as embodiments of the present disclosure. Hatching applied to a cross section of a drawing does not limit the material of an object to which the hatching is applied.

### (First exemplary variation)

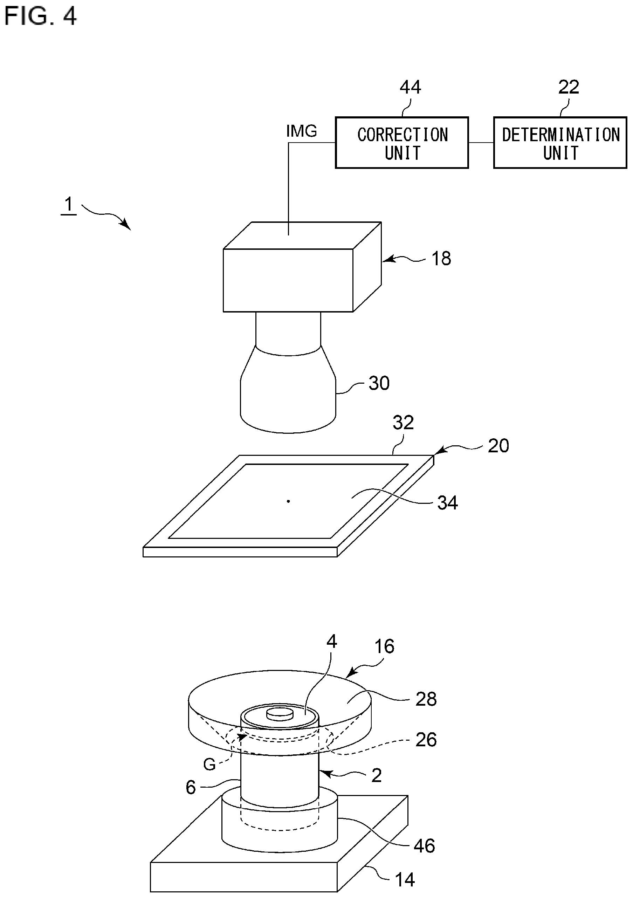

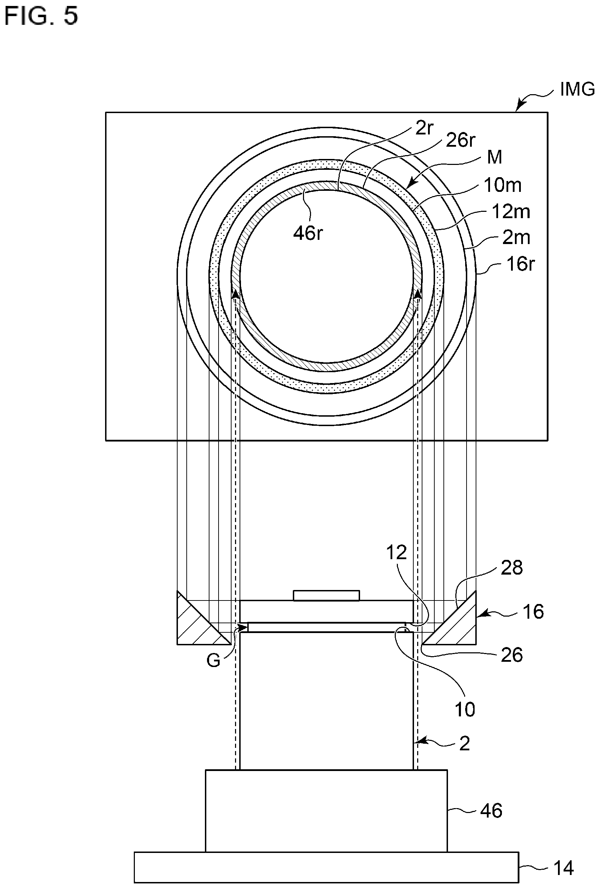

In the embodiment, the height position of the inspection object 2 is measured by the measurement unit 24, and the size of the mirror image M is kept constant by adjusting the height position. On the other hand, in the present exemplary variation, the size of the mirror image M is kept constant by adjustment through calculation. Fig. 4 is a schematic diagram of an inspection device 1 according to the first exemplary variation. Fig. 5 is a diagram explaining an image IMG captured by the camera 18.

In other words, the inspection device 1 according to the present exemplary variation includes a correction unit 44. On the basis of a real image 2r of the inspection object 2 and a real image 26r of the opening 26 in the image IMG, the correction unit 44 corrects the size of the mirror image 10m of the groove 10 and the mirror image 12m of the leading end portion 12 in the image IMG, in other words, the size of the mirror image M. The real image 2r of the inspection object 2 is the real image of the outer peripheral edge of the inspection object 2, and the real image 26r of the opening 26 is the real image of the peripheral edge of the opening 26. The size of these real images is theoretically constant regardless of the position of the inspection object 2 relative to the axicon mirror 16. Therefore, by digitally correcting the size of the mirror image on the basis of these real images, the misalignment of the inspection object 2 with respect to the axicon mirror 16 can be canceled.

The correction unit 44 sends information related to the corrected mirror image to the determination unit 22. The determination unit 22 determines the fixation state of the first member 4 and the second member 6 based on the acquired information. This can increase the inspection accuracy of the fixation state.

As shown in Fig. 5, the real image 16r of the outer peripheral edge of the axicon mirror 16, the mirror image 2m of the outer peripheral edge of the inspection object 2, the mirror image 12m of the leading end portion 12, the mirror image 10m of the groove 10, the real image 26r of the inner peripheral edge of the axicon mirror 16, that is, the peripheral edge of the opening 26, and the real image 2r of the outer peripheral edge of the inspection object 2 are arranged in this order from the outside to the inside in the image IMG. The mirror image M is formed by the mirror image 12m of the leading end portion 12 and the mirror image 10m of the groove 10.

As an example, the correction unit 44 measures the size of the real image 26r of the peripheral edge of the opening 26 in the image IMG, that is, the inner diameter of the axicon mirror 16 (Step S1). Further, the correction unit 44 measures the size of the real image 2r of the inspection object 2, that is, the outer diameter of the inspection object 2 (Step S2). When measuring the inner and outer diameters, the contour of the object is identified using a known edge detection method. The same applies to the dimensional measurement of each unit described below. The correction unit 44 then calculates an optical correction factor by dividing the inner diameter of the axicon mirror 16 measured in Step S1 by the production value of the inner diameter of the axicon mirror 16, that is, the actual inner diameter of the axicon mirror 16 (Step S3). The optical correction factor is a correction factor for taking into account the influence of optical aberration that may occur in the axicon mirror 16 and the camera 18. Further, the correction unit 44 calculates the outer diameter of the inspection object 2 after optical correction by integrating the optical correction factor to the outer diameter of the inspection object 2 calculated in Step S2 (Step S4).

The correction unit 44 also measures the size of the mirror image 2m of the inspection object 2 (Step S5). Then, based on the outer diameter of the inspection object 2 after the optical correction calculated in Step S4 and the size of the mirror image 2m measured in Step S5, the correction unit 44 calculates a correction value for acquiring the outer diameter of the inspection object 2 obtained on the basis of the production value of the inner diameter of the axicon mirror 16, i.e., the true outer diameter of the inspection object 2 (Step S6). More specifically, given that the outer diameter of the inspection object 2 after the optical correction calculated in Step S4 is denoted by S4, that the size of the mirror image 2m measured in Step S5 is denoted by S5, and that the correction value to acquire the true outer diameter of the inspection object 2 is denoted by m, if the inclination angle of the mirror surface 28 is 45 degrees, the correction value m is calculated based on Expression (1): m = (S5 / S4) / 2√2.

The correction unit 44 then calculates the amount of misalignment of the position of the inspection object 2 relative to the axicon mirror 16 from the correction value for acquiring the true outer diameter of the inspection object 2 calculated in Step S6 and the size of the mirror image 2m of the inspection object 2 measured in step S5, based on the inclination angle of the mirror surface 28 (Step S7). For example, the mirror image 2m of the inspection object 2 changes by 2×√2 mm when the position of the inspection object 2 relative to the axicon mirror 16 changes by 1 mm if the inclination angle of the mirror surface 28 is 45 degrees, and based on this, the amount of misalignment can be calculated. More specifically, when the amount of misalignment is denoted by X, if the inclination angle of the mirror surface 28 is 45 degrees, the amount of misalignment X is calculated based on Expression (2): X [mm] = 1 - {(S5 - S4) / (2√2 × m)}. S4, S5, and m in Expression (2) are the same as those in Expression (1).

The correction unit 44 then calculates the size of the mirror image 12m of the leading end portion 12 and corrects the size of the mirror image 12m by an amount corresponding to the amount of misalignment calculated in Step S7 (Step S8). More specifically, when the calculated size of the mirror image 12m is denoted by P and the corrected size of the mirror image 12m is denoted by Q, if the inclination angle of the mirror surface 28 is 45 degrees, the corrected size Q of the mirror image 12m is calculated based on Expression (3): Q = X × 2√2 × m × P. m and X in Expression (3) are the same as those in Expression (1) or Expression (2).

Further, the correction unit 44 calculates the size of the mirror image 10m of the groove 10 and corrects the size of the mirror image 10m by an amount corresponding to the amount of misalignment calculated in Step S7 (Step S9). More specifically, when the calculated size of the mirror image 10m is denoted by R and the corrected size of the mirror image 10m is denoted by T, if the inclination angle of the mirror surface 28 is 45 degrees, the corrected size T of the mirror image 10m is calculated based on Expression (4): T = X × 2√2 × m × R. m and X in Expression (4) are the same as those in Expression (1) or Expression (2) .

This allows the mirror image M of a constant size to be acquired regardless of the position of the inspection object 2 relative to the axicon mirror 16. The present exemplary variation also eliminates temperature-dependent errors that may occur in an optical system of the axicon mirror 16, the camera 18, and the like. The width of the mirror image M can be calculated by dividing the absolute value of the difference between the size of the corrected mirror image 12m and the corrected mirror image 10m by two.

When correcting the size of the mirror image in the image IMG on the basis of the real image 2r of the inspection object 2 and the real image 26r of the opening 26 in the image IMG, it is desired to extract the outer peripheral edge of the inspection object 2 and the peripheral edge of the opening 26 in the image IMG with high accuracy. For this reason, the inspection device 1 according to the present exemplary variation includes a low-reflective member 46. The low-reflective member 46 has a lower light reflectance than the outer peripheral surface of the inspection object 2 and the mirror surface 28. The low-reflective member 46 may be made of a material such as resin that has a lower light reflectance than the inspection object 2 and the mirror surface 28 or may be a member obtained by coating a low-reflective member on the surface of any material.

The low-reflective member 46 is arranged so as to overlap the gap between the inspection object 2 and the opening 26 when viewed from the arrangement direction of the inspection object 2 and the camera 18. Therefore, the real image 46r of the low-reflective member 46 appears between the real image 2r of the inspection object 2 and the real image 26r of the opening 26 in the image IMG. The pixel gradation corresponding to the real image 46r is lower than the pixel gradation corresponding to the real image 2r and the real image 26r. This makes the contour of the real image 2r and the contour of the real image 26r clearer, and the outer diameter of the inspection object 2 and the inner diameter of the axicon mirror 16 can be measured with high accuracy. Therefore, the inspection accuracy of the fixation state can be improved. Thus, the correction of the mirror image by physical position adjustment of the inspection object 2 and the correction of the mirror image by calculation may be combined.

### (Second Exemplary Variation)

In the embodiment, the contour of the mirror image M becoming unclear due to diffracted or scattered light is suppressed by providing a low-reflective surface 42 on the peripheral edge of the opening 26. On the other hand, a flat portion is provided at the peripheral edge of the opening 26 so as to solve the problem in the present exemplary variation. Fig. 6 is a schematic diagram of an axicon mirror 16 provided in an inspection device 1 according to the second exemplary variation.

The axicon mirror 16 according to the present exemplary variation has a cylindrical opening 26 and a flat portion 48 inside the opening 26. The flat portion 48 extends from the peripheral edge or upper end of the opening 26 along the outer peripheral surface of the inspection object 2. The flat portion 48 may incline away from the outer peripheral surface of the inspection object 2 as a distance from the camera 18 increases, as shown by a double-dotted line in Fig. 6. Even if stray light SL is generated due to diffraction or scattering of light VL emitted from the lighting unit 20 at the inner peripheral edge of the axicon mirror 16, the flat portion 48 can suppress the stray light SL from traveling toward the camera 18. As a result, the inspection accuracy of the fixation state can be improved. The low-reflective surface 42 and the flat portion 48 may be combined.

### (Another Exemplary Variation)

The camera 18 may have a lens other than the telecentric lens 30. The lighting unit 20 may be a light unit other than a flat dome lighting unit, such as a dome or bar light unit.

The embodiments may be defined by the items described in the following.

### [Item 1]

An inspection device (1) that inspects a fixation state of a first member (4) and a second member (6) of an inspection object (2) that includes the first member (4) and the second member (6), which are fixed to each other,
wherein in the inspection object (2), the first member (4) and the second member (6) are fixed to each other by fitting of a leading end portion (12) of the first member (4) into a groove (10) provided on the outer peripheral surface of the second member (6), which has a cylindrical shape, and
wherein the inspection device (1) comprises:
   an axicon mirror (16) that has an opening (26) into which the inspection object (2) is inserted and a mirror surface (28) extending outside the opening (26) and surrounding the outer peripheral surface of the inspection object (2) inserted into the opening (26); and
   a camera (18) that captures a mirror image (10m) of the groove (10) and a mirror image (12m) of the leading end portion (12) that are shown on the mirror surface (28).

### [Item 2]

The inspection device (1) according to Item 1, comprising:
a determination unit (22) that determines the fixation state of the first member (4) and the second member (6) based on the shape of the mirror image (10m) of the groove (10) and the shape of the mirror image (12m) of the leading end portion (12).

### [Item 3]

The inspection device (1) according to Item 1 or 2, comprising:
a measurement unit (24) that measures the position of the inspection object (2) relative to the axicon mirror (16) in the direction of insertion of the inspection object (2) into the opening (26).

### [Item 4]

The inspection device (1) according to Item 3,
wherein the measurement unit (24) has: a turning mirror (36) that is arranged so as to overlap the inspection object (2) when viewed from the arrangement direction of the inspection object (2) and the camera (18); and a laser displacement sensor (38) that is arranged to be misaligned in a direction intersecting the arrangement direction.

### [Item 5]

The inspection device (1) according to any one of Item 1 through Item 4, comprising:
a correction unit (44) that corrects the size of the mirror image (10m) of the groove (10) and the size of the mirror image (12m) of the leading end portion (12) in an image (IMG) captured by the camera (18) on the basis of a real image (2r) of the inspection object (2) and a real image (26r) of the opening (26) in the image (IMG).

### [Item 6]

The inspection device (1) according to Item 5, comprising:
a low-reflective member (46) that has a lower light reflectance than the outer peripheral surface of the inspection object (2) and the mirror surface (28) and that is arranged so as to overlap the gap between the inspection object (2) and the opening (26) when viewed from the arrangement direction of the inspection object (2) and the camera (18).

### [Item 7]

The inspection device (1) according to any one of Item 1 through Item 6,
wherein the axicon mirror (16) has a flat portion (48) that extends from the peripheral edge of the opening (26) along the outer peripheral surface of the inspection object (2) or that inclines away from the outer peripheral surface of the inspection object (2) as a distance of the flat portion (48) from the camera (18) increases.

### [Item 8]

The inspection device (1) according to any one of Item 1 through Item 7,
wherein the axicon mirror (16) has a low-reflective surface (42) that has a lower light reflectance than the outer peripheral surface of the inspection object (2) and the mirror surface (28) at the peripheral edge of the opening (26).

### [Item 9]

An inspection method for inspecting a fixation state of a first member (4) and a second member (6) of an inspection object (2) that includes the first member (4) and the second member (6), which are fixed to each other,
wherein in the inspection object (2), the first member (4) and the second member (6) are fixed to each other by fitting of a leading end portion (12) of the first member (4) into a groove (10) provided on the outer peripheral surface of the second member (6), which has a cylindrical shape, and
the inspection method comprises: inserting the inspection object (2) into an opening (26) of an axicon mirror (16); and capturing, using a camera (18), a mirror image (10m) of the groove (10) and a mirror image (12m) of the leading end portion (12) that are shown on a mirror surface (28) of the axicon mirror (16).

### INDUSTRIAL APPLICABILITY

The present disclosure can be used for inspection devices and inspection methods.

### REFERENCE SIGNS LIST

1 inspection device, 2 inspection object, 4 first member, 6 second member, 8 opening, 10 groove, 12 leading end portion, 16 axicon mirror, 18 camera, 22 determination unit, 24 measurement unit, 26 opening, 28 mirror surface, 36 turning mirror, 38 laser displacement sensor, 42 low-reflective surface, 44 correction unit, 46 low-reflective member, 48 flat portion

## Claims

1. An inspection device that inspects a fixation state of a first member and a second member of an inspection object that includes the first member and the second member, which are fixed to each other,
wherein in the inspection object, the first member and the second member are fixed to each other by fitting of a leading end portion of the first member into a groove provided on the outer peripheral surface of the second member, which has a cylindrical shape, and
wherein the inspection device comprises:
an axicon mirror that has an opening into which the inspection object is inserted and a mirror surface extending outside the opening and surrounding the outer peripheral surface of the inspection object inserted into the opening; and
a camera that captures a mirror image of the groove and a mirror image of the leading end portion that are shown on the mirror surface.

2. The inspection device according to claim 1, comprising:
a determination unit that determines the fixation state of the first member and the second member based on the shape of the mirror image of the groove and the shape of the mirror image of the leading end portion.

3. The inspection device according to Claim 1 or 2, comprising:
a measurement unit that measures the position of the inspection object relative to the axicon mirror in the direction of insertion of the inspection object into the opening.

4. The inspection device according to Claim 3,
wherein the measurement unit has: a turning mirror that is arranged so as to overlap the inspection object when viewed from the arrangement direction of the inspection object and the camera; and a laser displacement sensor that is arranged to be misaligned in a direction intersecting the arrangement direction.

5. The inspection device according to Claim 1 or 2, comprising:
a correction unit that corrects the size of the mirror image of the groove and the size of the mirror image of the leading end portion in an image captured by the camera on the basis of a real image of the inspection object and a real image of the opening in the image.

6. The inspection device according to Claim 5, comprising:
a low-reflective member that has a lower light reflectance than the outer peripheral surface of the inspection object and the mirror surface and that is arranged so as to overlap the gap between the inspection object and the opening when viewed from the arrangement direction of the inspection object and the camera.

7. The inspection device according to Claim 1 or 2,
wherein the axicon mirror has a flat portion that extends from the peripheral edge of the opening along the outer peripheral surface of the inspection object or that inclines away from the outer peripheral surface of the inspection object as a distance of the flat portion from the camera increases.

8. The inspection device according to Claim 1 or 2,
wherein the axicon mirror has a low-reflective surface that has a lower light reflectance than the outer peripheral surface of the inspection object and the mirror surface at the peripheral edge of the opening.

9. An inspection method for inspecting a fixation state of a first member and a second member of an inspection object that includes the first member and the second member, which are fixed to each other,
wherein in the inspection object, the first member and the second member are fixed to each other by fitting of a leading end portion of the first member into a groove provided on the outer peripheral surface of the second member, which has a cylindrical shape, and
the inspection method comprises: inserting the inspection object into an opening of an axicon mirror; and capturing, using a camera, a mirror image of the groove and a mirror image of the leading end portion that are shown on a mirror surface of the axicon mirror.
